Europäisches Patentamt

European Patent Office

Office européen des brevets

(11) Veröffentlichungsnummer : **0 352 585 B1**

(12) **EUROPÄISCHE PATENTSCHRIFT**

(45) Veröffentlichungstag der Patentschrift :
**19.08.92 Patentblatt 92/34**

(51) Int. Cl.$^5$ : **C04B 24/26**

(21) Anmeldenummer : **89113048.6**

(22) Anmeldetag : **15.07.89**

(54) **Staubbindemittel für das Betonspritzverfahren (I).**

(30) Priorität : **23.07.88 DE 3825162**

(43) Veröffentlichungstag der Anmeldung :
**31.01.90 Patentblatt 90/05**

(45) Bekanntmachung des Hinweises auf die
Patenterteilung :
**19.08.92 Patentblatt 92/34**

(84) Benannte Vertragsstaaten :
**AT CH DE FR GB LI SE**

(56) Entgegenhaltungen :
**GB-A- 2 202 527**
**US-A- 4 569 395**
**CHEMICAL ABSTRACTS, vol. 104, no. 6, 10**
**Februar 1986 Columbus, Ohio, USA & JP-**
**A-60123666 (HOECHST GOSEI CO) 02-07-**
**1985Seite 319; ref. no. 38831A**
**CHEMICAL ABSTRACTS, vol. 102, no. 8, 25**
**Februar 1985 Columbus, Ohio, USA & JP-**
**A-59162156 (OHTAKE WORKS CO) 13-09-**
**1984Seite 276; ref. no. 66482Q**

(56) Entgegenhaltungen :
**CHEMICAL ABSTRACTS, vol. 104, no. 24, 16**
**Juni 1986 Columbus, Ohio, USA & JP-**
**A-6131335 (KAJIMA CORP; KURITA WATERIN-**
**DUSTRIES) 13-02-1986 Seite 302; ref. no.**
**212148V**
**CHEMICAL ABSTRACTS, vol. 107, no. 16, Co-**
**lumbus, Ohio, USA & SU-1305308 (V.E.AKHRI-**
**MENKO et al) 23-04-1987 ref. no. 139907X**

(73) Patentinhaber : **Henkel**
**Kommanditgesellschaft auf Aktien**
**Henkelstrasse 67**
**W-4000 Düsseldorf 13 (DE)**

(72) Erfinder : **Hase, Brigitte, Dr.**
**Gerhart-Hauptmann-Strasse 34**
**W-4006 Erkrath 1 (DE)**
Erfinder : **Jüttner, Werner**
**Tannenhofweg 69**
**W-4000 Düsseldorf 12 (DE)**
Erfinder : **Schreyer, Jörg, Dr.**
**Maybachstrasse 37**
**W-4150 Krefeld (DE)**
Erfinder : **Eickschen, Eberhard**
**Beethovenstrasse 7**
**W-5030 Hürth-Efferen (DE)**

**Beschreibung**

Die im folgenden beschriebene Erfindung liegt auf dem Gebiet der Verarbeitung von Beton mit Hilfe von Spritzverfahren.

Neben der herkömmlichen Verarbeitung von Beton, bei der der aus Zuschlagstoffen, Wasser und Zement bestehende Frischbeton in Schalungen oder Formen gestampft oder gegossen wird und dort erstarrt, kennt man die Verarbeitung von Beton mit Hilfe von Spritzverfahren. Spritzbeton wird heute in zahlreichen Gebieten der Bautechnik eingesetzt, beispielsweise bei der Sanierung von Gebäudefassaden, bei der Hangsicherung und mit besonderer Bedeutung im Untertagebau (Tunnelbau, Bergbau) zur Hohlraumsicherung. Man unterscheidet dabei zwischen den sogenannten Naßspritzverfahren, bei denen ein fertig gemischter Frischbeton mit Hilfe von Pumpen (im Dichtstrom) oder mit Hilfe von Preßluft (im Dünnstrom) durch Leitungen bis zur Spritzdüse gefördert wird, und dem Trockenspritzverfahren. Bei diesem wird zunächst nur ein Gemisch aus den weitgehend trockenen Zuschlagstoffen und Zement hergestellt und dieses mit Hilfe von Druckluft durch Rohrleitungen bis zur Spritzdüse gefördert. Das Zugabewasser wird beim Trockenspritzverfahren in einer getrennten Leitung herangeführt und erst an der Spritzdüse zugegeben, so daß eine innige Vermischung von Trockengemisch und Wasser erst auf dem kurzen Weg zwischen Düse und Auftragsfläche stattfindet. Bei den Naßspritzverfahren wird dagegen das gesamte Zugabewasser bereits vor der Förderung durch die Rohrleitungen eingemischt. Dabei wählt man für die schnelle pneumatische Förderung im Dünnstrom trockenere Mischungen während für die Förderung im Dichtstrom leicht fließende, feuchtere Mischungen benötigt werden.

Bei einer Reihe von Anwendungen des Spritzbetons ist die Frühfestigkeit des Betons von entscheidender Bedeutung, beispielsweise im Tunnelbau, und dort vor allem beim Betonieren über Kopf an waagerechten oder überhängenden Flächen. Um hohe Frühfestigkeiten zu erreichen, setzt man sogenannte Erstarrungsbeschleuniger (BE-Mittel) zu. Das sind in der Mehrzahl stark alkalische anorganische Materialien, die üblicherweise in Form von Pulvern dem trockenen Vorgemisch aus Zement und Zuschlagstoffen oder auch flüssig dem feuchten Gemisch oder dem Zugabewasser zugesetzt werden.

Das Trockenspritzverfahren ist mit kleineren Maschinen als die Naßspritzverfahren durchführbar und dadurch im Baubetrieb flexibler einsetzbar. Zudem läßt sich das trockene Gemisch aus Zement und Zuschlagstoffen länger lagern als die feuchten Gemische, die in den Naßspritzverfahren angewandt werden. Weitere Einzelheiten zur Herstellung und Verarbeitung von Spritzbeton sind in der Fachliteratur zu finden, beispielsweise bei G. Brux, Zement und Beton 22 (4), 160 - 174 (1977) und in der deutschen Norm DIN 18 551 (1979).

Ein schwerwiegender Nachteil des Trockenspritzverfahrens ist in der gegenüber den Naßspritzverfahren deutlich größeren Staubentwicklung zu sehen. Vor allem dann, wenn der Arbeitsplatz schwer belüftbar ist, wird es schwierig, die Staubmengen in gesundheitlich vertretbaren Grenzen zu halten und die bestehenden Richtlinien und Gesetze des Arbeitsschutzes zu erfüllen. Von besonderer Bedeutung sind in dieser Hinsicht der lungengängige Feinstaubanteil mit Partikelgrößen unterhalb von 5 µm und der silikogene Quarzanteil des Staubs.

Eine wenn auch sehr viel geringere Staubentwicklung ist allerdings auch beim Naßspritzverfahren in Dünnstromtechnik noch festzustellen, so daß auch hier aus den gleichen Gründen Schutzmaßnahmen angezeigt sein können. An diese Maßnahmen werden jedoch weitaus geringere Ansprüche gestellt als beim Trockenspritzverfahren.

Eine deutliche Staubreduktion läßt sich beim Verarbeiten von Beton im Spritzfahren durch den Zusatz von Staubbindemitteln erreichen. Diese Mittel, die heute im allgemeinen auf Methylcellulose basieren, besitzen jedoch den Nachteil, daß sie in vielen Fällen die Wirkung der Erstarrungsbeschleuniger, d. h. die Erhöhung der Frühfestigkeit, weitgehend oder vollständig rückgängig machen. Da bei zahlreichen Anwendungen eine hohe Frühfestigkeit aber unumgänglich ist und deshalb auf den Zusatz von Erstarrungsbeschleunigern nicht verzichtet werden kann, ist der Einsatz dieser Staubbindemittel nur sehr begrenzt möglich.

Aufgabe der Erfindung war es deshalb, ein Staubbindemittel zu finden, das auch bei Verwendung von Erstarrungsbeschleunigern eingesetzt werden kann, ohne deren Wirkung zu beeinträchtigen. Es wurde gefunden, daß diese Aufgabe mit bestimmten Polyvinylalkoholen gelöst werden kann.

Gegenstand der Erfindung ist die Verwendung von Copolymerisaten aus Vinylalkohol und Vinylacetat als staubbindenden Zusatz bei der Ausbringung von Beton im Naßspritzverfahren im Dünnstrom oder, bevorzugt, im Trockenspritzverfahren. Vorzugsweise werden die Copolymerisate dort verwendet, wo auch Erstarrungsbeschleuniger zugesetzt werden. Die erfindungsgemäßen Copolymerisate enthalten vorzugsweise 50 bis 99 Gew.-%, insbesondere 75 bis 90 Gew.-% Vinylalkohol. Sie weisen als 4 %ige wäßrige Lösungen bei 20 °C Viskositäten von vorzugsweise 5 bis 50 mPas, insbesondere 10 bis 30 mPas auf. Die Copolymerisate sind an sich bekannt; sie werden üblicherweise durch partielle Hydrolyse von Polyvinylacetat hergestellt.

Die Wirkung der erfindungsgemäßen Staubbindemittel ist weitgehend unabhängig von den Rohstoffen, die zur Herstellung des Betons verwendet werden. Besonders vorteilhaft für die Anwendung im Untertagebau ist die Verträglichkeit mit Erstarrungsbeschleunigern: Die Frühfestigkeit wird durch die Anwendung der Staubbindemittel praktisch nicht beeinträchtigt. Ebenso bleibt die Endfestigkeit des Betons nahezu unverändert. Als weiterer wesentlicher Vorteil der erfindungsgemäßen Mittel ist zu erwähnen, daß nicht nur die Menge des anfallenden Feinstaubs insgesamt reduziert wird, sondern daß im gleichen Maße der Anteil im Korngrößenbereich von etwa 0,5 - 2 μm vermindert wird, der sich am stärksten in der Lunge ablagert. Die Staubreduktion betrifft in gleichem Maße auch den Gehalt an Quarz im Staub, der für Silikoseerkrankungen verantwortlich gemacht wird.

Die Staubbindemittel können entweder als Lösung oder in fester Form dosiert werden. Bei Verwendung als Lösung kommt die Zugabe zum Wasservorrat oder aber auch die laufende Dosierung in den Wasserstrom, beispielsweise mit Hilfe von Dosierpumpen in Betracht. Werden die Mittel dagegen in fester Form dosiert, so können sie direkt während des Mischens von Zement und Zuschlagstoffen in den Zwangsmischer oder unmittelbar an der Spritzbetonmaschine zugesetzt werden. Die erfindungsgemäßen Staubbindemittel werden im allgemeinen in Mengen von 0,3 bis 3 Gew.-%, vorzugsweise 0,5 bis 2 Gew.-%, bezogen auf Zementgewicht, eingesetzt. Die Zugabe zur Trockenmischung oder deren Komponenten kann dabei allein oder aber zusammen mit weiteren Betonzusatzmitteln erfolgen. Als besonders vorteilhaft hat sich hier eine Abmischung mit pulverförmigen Erstarrungsbeschleunigern und gemeinsames Dosieren dieses Mittels erwiesen, da auf diese Weise die Zahl der notwendigen Dosierungen nicht erhöht wird und die Einhaltung der gewünschten Mengenverhältnisse von Erstarrungsbeschleuniger zu Staubbindemittel gewährleistet ist. Die pulverförmige Mischung aus Erstarrungsbeschleuniger und Staubbindemittel ist daher ein weiterer Gegenstand dieser Erfindung. Dieses feste Mittel enthält den Erstarrungsbeschleuniger und die erfindungsgemäßen Polymeren vorzugsweise in einem Gewichtsverhältnis von 10 : 1 bis 1 : 2. Es kann neben den eigentlichen Wirkstoffen auch Hilfs- und Trägerstoffe, beispielsweise Gesteinsmehl, enthalten, deren Menge aber meist nicht mehr als 60 Gew.-%, vorzugsweise 30 Gew.-%, des Mittels ausmacht.

Weitere Gegenstände der Erfindung sind das Betonnaßspritzverfahren im Dünnstrom und, bevorzugt, das Betontrockenspritzverfahren, bei dem die erfindungsgemäßen Staubbindemittel eingesetzt werden.

Als Ausgangsstoffe für die erfindungsgemäßen Betonspritzverfahren, bei denen als Staubbindemittel Copolymerisate aus Vinylalkohol und Vinylacetat eingesetzt werden, können alle Rohstoffe, die bei herkömmlichen Spritzverfahren üblich sind, eingesetzt werden.

Als Zement werden vorzugsweise Portland-Zement und Hochofen-Zement verwendet, doch können stattdessen oder zusammen damit in besonderen Fällen auch andere Zementtypen verwendet werden. Die Einsatzmenge an Zement liegt vorzugsweise zwischen etwa 240 und 450 kg, beim Trockenspritzverfahren insbesondere zwischen 330 und 380 kg/m³ Fertigbeton, je nach Größe der verwendeten Zuschläge.

Als Zuschlagstoffe finden neben Sand aller Art vor allem Kies, Schotter und Splitt Verwendung. Normalerweise werden Zuschläge mit kugeligem Korn bevorzugt. Die Korngröße der Zuschläge liegt vorzugsweise nicht über 16 mm und insbesondere nicht über 8 mm. Sofern die Korngröße nicht über 4 mm hinausgeht, spricht man beim Gesamtgemisch auch von Mörtel. Diese Sonderform wird im Rahmen dieser Erfindung vom Begriff Beton mit umfaßt. Für die Herstellung von Leichtbeton kommen als Zuschläge Blähtone und ähnliche Materialien von leichtem spezifischem Gewicht in Betracht. Entsprechend werden für Schwerbeton Zusätze von hohem spezifischen Gewicht, beispielsweise $BaSO_4$, verwendet. Die Menge der Zuschläge kann je nach Art des Betons in weiten Grenzen variiert werden. Sie liegt im allgemeinen zwischen 500 und 2500 kg/m³, im Falle von Normalbeton im Bereich von etwa 1600 bis etwa 2000 kg/m³.

In einzelnen Fällen können in die Spritzbetonmischung sogenannte Betonzusatzstoffe eingearbeitet werden. Man bezeichnet damit im allgemeinen fein verteilte Stoffe, mit denen die Verarbeitbarkeit des Betons verbessert werden kann, beispielsweise unlösliche mineralische Betonzusatzstoffe, die zur Erreichung eines ausreichend hohen Mehlkorngehaltes dienen. Der Begriff Mehlkorn umfaßt dabei Zement und alle Feinstoffe unterhalb 0,25 mm. Geeignete Zusatzstoffe sind beispielsweise Gesteinsmehle wie Trass und Steinkohlenflugasche. Die Menge der Zusatzstoffe wird im allgemeinen so gewählt, daß ein Mehlkornanteil zwischen 350 und 550 kg/m³ erreicht wird.

Betonzusatzmittel sind pulverförmige oder flüssige Stoffe, die dem Beton nur in geringer Menge, meist nicht mehr als 5 Gew.-%, bezogen auf Zement zugesetzt werden, um die Betoneigenschaften zu verändern. Bei den herkömmlichen Betonierverfahren sind beispielsweise Betonverflüssiger, Luftporenbildner, Betondichtungsmittel, Erstarrungsverzögerer und Einpreßhilfen gebräuchlich, die aber sämliche beim Trockenspritzverfahren und beim Naßspritzverfahren im Dünnstrom nicht zum Einsatz kommen. Bedeutsam ist dagegen die Verwendung von Erstarrungsbeschleunigern (BE), um die Frühfestigkeit zu erhöhen und den Auftrag dickerer Schichten in einem Gang zu ermöglichen. Die heute üblichen BE-Mittel enthalten, gegebenenfalls zusammen mit Hilfs- und Trägerstoffen (beispielsweise Gesteinsmehl), als Erstarrungsbeschleuniger in erster Linie alkalisch reagierende anorganische Materialien, wie Carbonate, Silikate und Aluminate. Bevorzugte Wirkstoffe sind Natrium- und Kaliumaluminat, Natrium- und Calciumcarbonat, Natriumsilikat und Natrium- und Kaliumhydroxid. Für das Trockenspritzverfahren werden die BE-Mittel vor allem in Pulverform verwendet und dem Trok-

kengemisch zudosiert. Daneben besteht aber auch die Möglichkeit, wäßrige Lösungen der BE-Mittel direkt dem Anmachwasser oder dem Naßgemisch zuzugeben.

Zur Herstellung des Trockengemisches für das Trockenspritzverfahren werden die Ausgangsstoffe in trockenem bis höchstens erdfeuchtem Zustand eingesetzt. Üblich sind Eigenfeuchten bei den Zuschlagstoffen von etwa 2 bis etwa 5%. Das Mischen der Ausgangsstoffe erfolgt in Zwangsmischern, vorzugsweise mit hoher Drehzahl, in dem Maße, wie das Trockengemisch weiter verarbeitet werden kann. Die Förderung des Trockengemisches bis zur Spritzdüse geschieht in geeigneten Rohrleitungen mit Hilfe eines Preßluftstromes, dem das Trockengemisch maschinell zudosiert wird.

Das für das Abbinden des Betons und seine Haftung an der Wand notwendige Zugabewasser wird dem Trockengemisch erst in oder an der Spritzdüse zugefügt. Weit verbreitet ist die Zugabe des Wassers mit Hilfe einer Ringdüse, die sich in der Spritzdüse befindet und die zur Ausbildung eines Wassermantels um den Sprühstrahl führt. Die Wassermenge wird manuell durch den Düsenführer bestimmt, der die Menge der Fördergeschwindigkeit und den Besonderheiten der Auftragsfläche anpaßt. Je nach der gewünschten Festigkeit des Betons sind Wasser-Zement-Werte (Verhältnis von Wasser : Zement) zwischen 0,35 und 0,55 üblich. Bei der Berechnung der Wassermenge ist stets auch die bereits in den Rohstoffen enthaltene Feuchte zu berücksichtigen.

Beim Naßspritzverfahren im Dünnstrom wird ein verhältnismäßig trockenes Gemisch aus Zement, Zuschlagstoffen, Wasser und sonstigen Zusätzen hergestellt, wobei die Wasser-Zement-Werte sehr genau eingestellt werden können. Sie liegen im Unterschied zum Naßspritzverfahren im Dichtstrom nicht über 0,44. Dadurch wird eine schnelle Förderung der Betonteilchen im Luftstrom (weitgehend im Flug) möglich.

Die erfindungsgemäßen Betonspritzverfahren unter Verwendung von Vinylacetat-Vinylalkohol-copolymerisaten als Staubbindemittel bieten Vorteile gegenüber den herkömmlichen Spritzverfahren vor allem dann, wenn Beton an schwer belüftbaren Stellen ausgebracht werden soll und schnell abbinden muß. Sie empfehlen sich deshalb besonders für den Tunnelbau und die Anwendung im Bergbau, doch sind sie selbstverständlich auch im Hoch- und Tiefbau überall dort einsetzbar, wo die Anwendung von Spritzbeton zweckmäßig ist.

## BEISPIELE

In den folgenden Beispielen wurde in allen Fällen Spritzbeton nach folgenden Verfahren hergestellt:

Eine Trockenmischung, die je m³ Frischbeton aus 350 kg Zement und 1850 kg Zuschlag in Form eines Sand/Kies-Gemisches ähnlich Sieblinie B 8 nach DIN 1045 (Größtkorn 8 mm, Eigenfeuchte 3 Gew.-%) bestand, wurde in einem Zwangsmischer von 150 l Inhalt vorgemischt und einer spritzbetonmaschine ALIVA AL-280 zugeführt. Die Leistung dieser Maschine betrug ca 4 m³/h bei einer Förderschlauchlänge von 40 m, einem Schlauchdurchmesser von 50 mm und einem Förderdruck von 2,2 bar (Luftmenge ca. 12 m³/min). Das Anmachwasser wurde der Spritzdüse mit Hilfe einer innenliegenden Ringdüse in einer Menge von etwa 300 l/h zugeführt. Flüssige Zusatzmittel konnten dem Anmachwasser vor der Ringdüse mit Hilfe einer automatischen Dosierpumpe zugefügt werden.

Der eigentliche Spritzvorgang selbst lief in einem Versuchsraum von 6m Länge; 2,4m Höhe und 2,4m Breite ab, in dem die Spritzdüse in einer Höhe von 1 m im Abstand von 1,5 m vor der Schmalwand angeordnet war. Die Staubmeßgeräte Impaktor und Gravicon VC 25 befanden sich 2,5m hinter der Düsenöffnung in einer Höhe von 1,6 m.

## 1. Bestimmung der Feinstaubkonzentration

Die Gesamtkonzentration an lungengängigem Feinstaub (Korngröße unter 5 μm) wurde mit dem Staubsammelgerät Gravicon VC 25 bestimmt. Die Ergebnisse mehrerer Versuche zeigt Tabelle 1. Dabei wurden folgende Zusatzmittel dem Trockengemisch fest zugesetzt:

Staubbindemittel (1 Gew-%, bezogen auf Zement):

A: Polyvinylalkohol mit 21 Gew.-% Vinylacetat, Viskosität (Höppler) 13 mPas (4 %, 20 °C)
B: Polyvinylalkohol mit 21 Gew.-% Vinylacetat, Viskosität (Höppler) 25 mPas (4 %, 20 °C)
Erstarrungsbeschleuniger (BE-Mittel, 5 Gew.-%, bezogen auf Zement):
Tricosal T 1(R) (Basis Natriumaluminat/Natriumcarbonat)

### Tabelle 1

| Portland-zement PZ 45 F | Staub-binde-mittel | BE-Mittel | Feinstaub Konzentration mg/m$^3$ | Veränderung % |
|---|---|---|---|---|
| Anneliese | - | - | 44,7 | 0 |
| Anneliese | A | - | 15,2 | - 66 |
| Anneliese | B | - | 24,2 | - 46 |
| Schwenk | - | + | 43,1 | 0 |
| Schwenk | A | + | 18,2 | - 58 |

Aus den Ergebnissen wird deutlich, daß eine hohe Staubreduktion unabhängig davon erreicht wird, ob BE-Mittel anwesend ist oder nicht.

2. Bestimmung der Korngrößenverteilung

Bei Spritzversuchen mit Betonmischungen auf Basis des Portlandzements Anneliese PZ 45 F wurde die Staubzusammensetzung mit und ohne Zusatz des Staubbindemittels A (aus Beispiel 1) ermittelt. Die Messungen wurden mit Hilfe eines Kaskadenimpaktors durchgeführt und lieferten die in Tabelle 2 angeführten Ergebnisse.

### Tabelle 2

| Korngröße des Staubs µm | Staubanteil/mg ohne A | mit A | Staubreduktion % |
|---|---|---|---|
| 0,28 - 0,59 | 9 | 4 | 55 |
| 0,59 - 2,43 | 59 | 22 | 63 |
| 2,43 - 9,44 | 99 | 37 | 63 |
| über 9,44 | 82 | 74 | 10 |

Aus den gefundenen Werten wird deutlich, daß der Bereich der stärksten Staubreduktion auch den Größenbereich (um etwa 1 µm) umfaßt, der in der Lunge am stärksten abgelagert wird.

### 3. Bestimmung des Quarzgehaltes im Feinstaub

In den Staubproben, die mit dem Gerät VC 25 gesammelt wurden, ließen sich mit Hilfe der Infrarotspektrometrie die Quarzgehalte bestimmen.

Die Ergebnisse mehrerer Versuche sind in Tabelle 3 zusammengestellt. Bei den Versuchen wurden wiederum feste BE-Mittel mit 5 Gew.-% und Staubbindemittel (wie in Beispiel 1) mit 1 Gew.-%, bezogen auf Zement, dosiert.

<u>T a b e l l e  3</u>

| Portland- zement PZ 45 F | BE- Mittel | Staub- binde- mittel | <u>Feinstaub</u> mg/3 | <u>Quarzgehalt</u> % |
|---|---|---|---|---|
| Anneliese | Guttacret(R) | - | 52,5 | 0,61 |
| " | " | A | 37,7 | 0,66 |
| Anneliese | Tricosal(R) T1 | - | 34,8 | 1,10 |
| " | " | A | 26,1 | 1,10 |
| Schwenk | Addiment(R) BE 2 | - | 29,9 | 1,06 |
| " | " | A | 21,1 | 0,99 |
| Schwenk | Betocret(R) | - | 33,8 | 0,80 |
| " | " | A | 17,7 | 0,75 |
| Schwenk | Tricosal(R) T1 | - | 43,1 | 0,98 |
| " | " | A | 18,2 | 0,95 |

Aus den Werten ist erkennbar, daß der Quarzanteil des Feinstaubs im gleichen Maße zurückgeht wie der Gesamtfeinstaub.

### 4. Frühfestigkeit des Betons

Bei Versuchen mit dem Portlandzement Schwenk PZ 45 F wurden verschiedene feste Erstarrungsbeschleuniger entweder allein (5 Gew.-%, bezogen auf Zement) oder als Vorgemisch mit dem Staubbindemittel A (aus Beispiel 1, Gewichtsverhältnis 5 : 1, insgesamt 6 Gew.-%, bezogen auf Zement) dem Trockengemisch zugesetzt. 8 Stunden nach Ausbringung des Betons wurde dessen Druckfestigkeit mit dem Kaindl-Maico-Gerät

bestimmt (Tabelle 4).

<u>T a b e l l e  4</u>

| BE-Mittel | Frühfestigkeit/N/mm$^2$ | | Veränderung der |
| | ohne A | mit A | der Früh- |
| | | | festigkeit/% |
|---|---|---|---|
| Addiment$^{(R)}$ BE 2 | 5,93 | 5,53 | - 7 |
| Betocret$^{(R)}$ | 5,77 | 4,93 | - 15 |
| Fluresit$^{(R)}$ | 5,83 | 5,20 | - 11 |
| Guttacret$^{(R)}$ | 3,57 | 3,73 | + 5 . |
| Tricosal$^{(R)}$ T 1 | 5,70 | 5,27 | - 8 |

Die Ergebnisse lassen erkennen, daß durch den Zusatz des erfindungsgemäßen Staubbindemittels die Frühfestigkeit nicht wesentlich beeinträchtigt wird.

5. <u>Bestimmung der 28-Tage-Druckfestigkeit des erhärteten Betons</u>

Auch bei diesen Versuchen wurden dem Trockengemisch entweder Erstarrungsbeschleuniger allein (5 Gew.-%, bezogen auf Zement) oder in Form eines vorgefertigten Gemisches mit Staubbindemittel A (aus Beispiel 1, Gewichtsverhältnis 5 : 1, insgesamt 6 Gew.-%, bezogen auf Zement) zugesetzt. Die Druckfestigkeit wurde nach 28 Tagen an Bohrkernen von 100 mm Durchmesser bestimmt. Die Ergebnisse (Mittelwerte von 3 oder 4 Einzelbestimmungen) zeigt Tabelle 5.

T a b e l l e 5

| Zement | BE-Mittel | Staub-binde mittel | Druckfestigkeit Mittelwerte N/mm$^2$ | Veränderung % |
|---|---|---|---|---|
| Anneliese PZ 45 F | Guttacret (R) (Basis Na-triumalu-minat) | - | 25,6 | 0 |
| | | A | 25,1 | -2 |
| Schwenk PZ 45 F | Addiment (R) BE 2 (Basis Na-triumalu-minat, Kalk) | - | 27,7 | 0 |
| | | A | 28,6 | +3 |

Aus den Werten wird deutlich, daß der Zusatz der erfindungsgemäßen Staubbindemittel die 28-Tage-Druckfestigkeit des Betons praktisch nicht verändert.

**Patentansprüche**

1. Verwendung von Copolymerisaten aus Vinylalkohol und Vinylacetat als staubbindenden Zusatz bei der Herstellung von Beton im Trockenspritzverfahren oder im Naßspritzverfahren im Dünnstrom.

2. Verwendung nach Anspruch 1 in einem Verfahren, bei dem auch Erstarrungsbeschleuniger zugesetzt wird.

3. Verwendung nach einem der Ansprüche 1 oder 2 von Copolymerisaten, die 50 bis 99 Gew.-%, vorzugsweise 75 bis 90 Gew.-% an Vinylalkohol enthalten.

4. Verwendung nach einem der Ansprüche 1 oder 2 von Copolymerisaten, die als 4 %ige wäßrige Lösungen bei 20 °C Viskositäten von 5 bis 50 mPas, vorzugsweise von 10 bis 30 mPas aufweisen.

5. Verwendung nach einem der Ansprüche 1 oder 2, bei der 0,3 bis 3 Gew.-%, vorzugsweise 0,5 bis 2 Gew.-% des Polymeren, bezogen auf trockenen Zement, eingesetzt werden.

6. Verwendung nach Anspruch 2, bei der der Erstarrungsbeschleuniger und das Copolymere in fester, vorgemischter Form dem trockenen Betonvorgemisch zugesetzt werden.

7. Betontrockenspritzverfahren, bei dem ein Copolymerisat aus Vinylalkohol und Vinylacetat als staubbindendes Mittel zugesetzt wird.

8. Betonnaßspritzverfahren im Dünnstrom, bei dem ein Copolymerisat aus Vinylalkohol und Vinylacetat als staubbindendes Mittel zugesetzt wird.

9. Festes Betonzusatzmittel, enthaltend Erstarrungsbeschleuniger und Copolymerisat aus Vinylalkohol und Vinylacetat im Gewichtsverhältnis der Wirkstoffe von 10 : 1 bis 1 : 2.

## Claims

1. The use of copolymers of vinyl alcohol and vinyl acetate as dust binding additives in the placing of concrete by the dry air placing process or by the thin-flow wet air placing process.

2. The use claimed in claim 1 in a process in which a setting accelerator is also added.

3. The use claimed in claim 1 or 2 of copolymers containing 50 to 99% by weight and preferably 75 to 90% by weight vinyl alcohol.

4. The use claimed in claim 1 or 2 of copolymers which, in the form of 4% aqueous solutions, have viscosities at 20°C in the range from 5 to 50 mPa.s and preferably in the range from 10 to 30 mPa.s.

5. The use claimed in claim 1 or 2 in which the polymer is used in a quantity of 0.3 to 3% by weight and preferably in a quantity of 0.5 to 2% by weight, based on dry cement.

6. The use claimed in claim 2 in which the setting accelerator and the copolymer are added in solid premixed form to the dry concrete premix.

7. A dry concrete air placing process in which a copolymer of vinyl alcohol and vinyl acetate is added as dust binding agent.

8. A wet thin-flow concrete air placing process in which a copolymer of vinyl alcohol and vinyl acetate is added as dust binding agent.

9. A solid concrete additive containing an accelerator and a copolymer of vinyl alcohol and vinyl acetate in a ratio by weight of the active substances of from 10:1 to 1:2.


## Revendications

1. Utilisation de copolymères d'alcool vinylique et d'acétate de vinyle comme additif de l'agent antipoussière en production de béton dans le procédé de projection à sec ou dans le procédé de projection humide en courant fluidisé.

2. Utilisation selon la revendication 1 dans un procédé dans lequel on ajoute aussi un accélérateur de prise.

3. Utilisation selon l'une des revendications 1 ou 2 de copolymères, qui comprennent 50 à 99 % en poids, de préférence 75 à 90 % en poids d'alcool polyvinyle.

4. Utilisation selon l'une des revendications 1 ou 2 de copolymères, qui présentent sous forme de solutions aqueuses à 4 % des viscosités à 20°C de 5 à 50 mPas, de préférence 10 à 30 mPas.

5. Utilisation selon l'une des revendications 1 ou 2, dans laquelle on utilise 0,3 à 3 % en poids, de préférence 0,5 à 2 % en poids du polymère, par rapport au ciment sec.

6. Utilisation selon la revendication 2, dans laquelle on ajoute l'accélérateur de prise et le copolymère sous forme solide prémélangée au prémélange sec de béton.

7. Procédé de projection de béton, dans lequel on ajoute comme antipoussière un copolymère d'alcool vinylique et d'acétate de vinyle.

8. Procédé de projection de béton en courant fluidisé, dans lequel on ajoute comme agent antipoussière un copolymère d'alcool vinylique et d'acétate de vinyle.

9. Additif solide de béton comprenant un accélérateur de prise et en copolymère d'alcool vinylique et d'acétate de vinyle en proportion pondérale des principes actifs de 10:1 à 1:2.